(19) Europäisches Patentamt
European Patent Office
Office européen des brevets

(11) EP 3 406 667 A1

(12) **EUROPEAN PATENT APPLICATION**
published in accordance with Art. 153(4) EPC

(43) Date of publication:
**28.11.2018 Bulletin 2018/48**

(21) Application number: **17741468.7**

(22) Date of filing: **19.01.2017**

(51) Int Cl.:
***C08L 23/22*** *(2006.01)*
***C08K 7/00*** *(2006.01)*
***C08L 9/02*** *(2006.01)*
***F16L 11/08*** *(2006.01)*
***F25B 1/00*** *(2006.01)*

(86) International application number:
**PCT/JP2017/001694**

(87) International publication number:
**WO 2017/126591 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.01.2016 JP 2016008112**

(71) Applicant: **The Yokohama Rubber Co., Ltd.**
**Minato-ku**
**Tokyo 105-8685 (JP)**

(72) Inventor: **SATO Aya**
**Hiratsuka City**
**Kanagawa 254-8601 (JP)**

(74) Representative: **Grünecker Patent- und Rechtsanwälte**
**PartG mbB**
**Leopoldstraße 4**
**80802 München (DE)**

(54) **RUBBER COMPOSITION AND HOSE**

(57) An object of the present invention is to provide a rubber composition having excellent oil resistance, and a hose. The present invention relates to a rubber composition including: a polymer containing a butyl rubber and an acrylonitrile butadiene copolymer rubber having an acrylonitrile content of 25 mass% or greater, and a scale-like filler; the rubber composition being used for a hose used to transport a polyol ester and a refrigerant; and a hose.

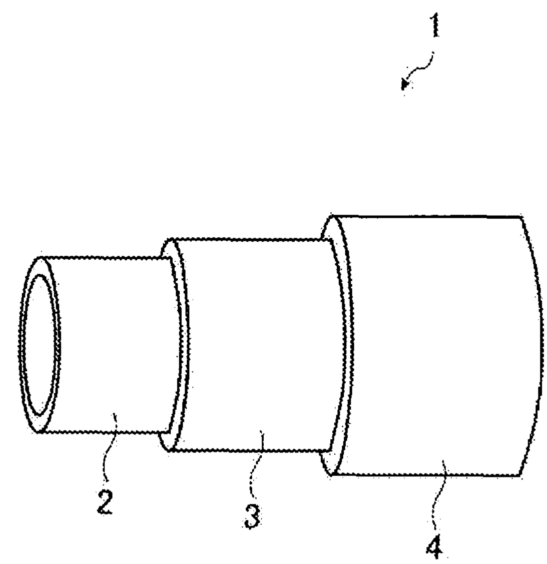


FIG. 1

EP 3 406 667 A1

## Description

### Technical Field

The present invention relates to a rubber composition and a hose.

### Background Art

In the related art, a refrigerating machine oil, such as a polyoxyalkylene, is used together with a refrigerant inside of an air conditioner hose (hose of an air conditioner).

Meanwhile, rubber compositions containing a butyl rubber or the like as a main component have been proposed as compositions constituting the innermost layers of air conditioner hoses (e.g. Patent Document 1) .

### Citation List

#### Patent Literature

Patent Document 1: JP 2004-176908 A

### Summary of Invention

#### Technical Problem

When the inventor of the present invention prepared a rubber composition containing a butyl rubber as a main component in accordance with Patent Document 1, produced a rubber by using the rubber composition, and evaluated the rubber by using a polyol ester as a refrigerating machine oil to the rubber, it was found that the rubber obtained by such a rubber composition may have poor oil resistance to polyol esters (specifically, for example, a rubber is easily swelled by a polyol ester).

Therefore, an object of the present invention is to provide a rubber composition having excellent oil resistance.

#### Solution to Problem

As a result of diligent research to solve the problems described above, the inventor of the present invention found that a rubber composition including: a polymer containing a butyl rubber and an acrylonitrile butadiene copolymer rubber having an acrylonitrile content of 25 mass% or greater, and a scale-like filler can achieve a predetermined effect, and thus completed the present invention.

The present invention is based on the findings described above and, specifically, solves the problem described above by the following features.

1. A rubber composition for a hose used to transport a polyol ester and a refrigerant, the rubber composition containing:

   a polymer containing a butyl rubber and an acrylonitrile butadiene copolymer rubber having an acrylonitrile content of 25 mass% or greater; and
   a scale-like filler.

2. The rubber composition according to 1 above, where the acrylonitrile butadiene copolymer rubber is at least one type selected from the group consisting of an acrylonitrile butadiene rubber and a blended product of an acrylonitile butadiene rubber and a polyvinyl chloride.
3. The rubber composition according to 1 or 2 above, where a content of the acrylonitrile is 6 mass% or greater of a content of the polymer.
4. The rubber composition according to any one of 1 to 3 above, where the scale-like filler is at least one type selected from the group consisting of talc and mica.
5. The rubber composition according to any one of 1 to 4 above, where a content of the scale-like filler is from 60 to 180 parts by mass per 100 parts by mass of the polymer.
6. A hose used for transporting a polyol ester and a refrigerant, the hose including an inner tube formed from the rubber composition described in any one of 1 to 5 above.

Advantageous Effects of Invention

The rubber composition according to an embodiment of the present invention has excellent oil resistance. Furthermore, the present invention can provide a hose.

Brief Description of Drawings

FIG. 1 is a perspective view illustrating a cutaway of each layer of a hose of an embodiment of the present invention.
FIG. 2 is a cross-sectional view of a cup for evaluation that was used to evaluate refrigerant permeation resistance of a rubber composition of an embodiment of the present invention.

Description of Embodiments

Embodiments of the present invention are described in detail below.
Note that in the present specification, numerical ranges indicated using "(from) ... to..." include the former number as the lower limit value and the later number as the upper limit value.
In the present specification, when a component contains two or more types of substances, the content of the component indicates the total content of the two or more types of substances.

Rubber composition

The rubber composition of an embodiment of the present invention is
a rubber composition for a hose used to transport a polyol ester and a refrigerant, the rubber composition containing: a polymer containing a butyl rubber and an acrylonitrile butadiene copolymer rubber having an acrylonitrile content of 25 mass% or greater; and
a scale-like filler.
The rubber composition of an embodiment of the present invention is thought to achieve desired effects as a result of having such a configuration. Although the reason is not clear, it is assumed to be as follows.
It is conceived that, because the polyol ester (POE) has an ester bond, oil resistance of a rubber tends to be lower in the cases where a polyol ester is applied compared to the cases where a polyalkylene glycol (PAG) is applied.
Therefore, it is considered that, when a polyol ester is used as a refrigerating machine oil in a hose having a rubber formed from a known rubber composition in the innermost layer, the innermost layer is easily swelled or the like by the polyol ester, thereby deteriorating the innermost layer. It is considered that such deterioration reduces tensile properties and/or refrigerant permeation resistance of the hose.
On the other hand, in an embodiment of the present invention, it is conceived that it is possible to prevent the rubber formed from the rubber composition of an embodiment of the present invention from being swelled or the like by the polyol ester by setting the acrylonitrile content in the acrylonitrile butadiene copolymer rubber to 25 mass% or greater. Because of this, it is presumed that an embodiment of the present invention achieved excellent oil resistance to the polyol ester.
Each of the components contained in the rubber composition of an embodiment of the present invention will be described in detail below.

Polymer

The rubber composition of an embodiment of the present invention contains a polymer containing a butyl rubber and an acrylonitrile butadiene copolymer rubber having an acrylonitrile content of 25 mass% or greater.

Butyl rubber

The rubber composition of an embodiment of the present invention exhibits excellent refrigerant permeation resistance by allowing a butyl rubber to be contained.
The butyl rubber (IIR) contained in an embodiment of the present invention is not particularly limited as long as the butyl rubber is a polymer having repeating units formed from isobutylene and isoprene. Examples thereof include known products.
A single butyl rubber can be used, or a combination of two or more types of butyl rubbers can be used. The method of producing butyl rubber is not particularly limited. Examples thereof include known methods.

Acrylonitrile butadiene copolymer rubber

The acrylonitrile butadiene copolymer rubber contained in the polymer is not particularly limited as long as the acrylonitrile butadiene copolymer rubber contains a polymer having at least repeating units derived from acrylonitrile and butadiene. An example of a preferable aspect is one in which the acrylonitrile butadiene copolymer contains at least an acrylonitrile butadiene rubber (NBR).
Examples of the acrylonitrile butadiene copolymer include acrylonitrile butadiene rubbers; and blended products of an acrylonitrile butadiene rubber and a polymer A except the acrylonitrile butadiene rubber. Note that the polymer A does not contain a butyl rubber.
Examples of the polymer A except the acrylonitrile butadiene rubber include polyvinyl chloride.
In an embodiment of the present invention, the acrylonitrile content (AN content) is 25 mass% or greater of the acrylonitrile butadiene copolymer rubber. The acrylonitrile content is an amount of repeating units derived from acrylonitrile in the acrylonitrile butadiene copolymer rubber. The content of the acrylonitrile content is preferably from 32 to 50 mass%, and more preferably from 38 to 45 mass%, in the acrylonitrile butadiene copolymer rubber from the perspective of achieving superior oil resistance. In an embodiment of the present invention, the acrylonitrile content was measured in accordance with JIS K 6384. Note that, when the acrylonitrile butadiene copolymer rubber is a blended product of an acrylonitrile butadiene rubber and a polymer A except the acrylonitrile butadiene rubber, the acrylonitrile content is an amount (mass%) relative to the total amount of the acrylonitrile butadiene copolymer rubber (i.e. a condition in which the acrylonitrile butadiene rubber and the polymer A except the acrylonitrile butadiene rubber are mixed).
An example of a preferable aspect is one in which the acrylonitrile butadiene copolymer rubber contains at least one type selected from the group consisting of an acrylonitrile butadiene rubber and a blended product of an acrylonitile butadiene rubber and a polyvinyl chloride (hereinafter, also simply referred to as "NBR-PVC blended product").
All of the acrylonitrile butadiene copolymer rubber may be an NBR or a blended product (e.g. NBR-PVC blended product).

Acrylonitrile butadiene rubber

The acrylonitrile butadiene rubber as the acrylonitrile butadiene copolymer rubber is not particularly limited as long as the acrylonitrile butadiene rubber is a polymer having repeating units derived from acrylonitrile and butadiene. Examples thereof include known acrylonitrile butadiene rubbers.

NBR-PVC blended product

The NBR-PVC blended product is not particularly limited as long as the NBR-PVC blended product is a mixture formed from at least an acrylonitrile butadiene rubber and a polyvinyl chloride.

• Acrylonitrile butadiene rubber

The acrylonitrile butadiene rubber constituting the NBR-PVC blended product is not particularly limited. Examples thereof include known acrylonitrile butadiene rubbers. A single acrylonitrile butadiene rubber can be used, or a combination of two or more types of acrylonitrile butadiene rubbers can be used.

• Polyvinyl chloride

The polyvinyl chloride (PVC) constituting the NBR-PVC blended product is not particularly limited. Examples thereof include known polyvinyl chlorides. A single polyvinyl chloride can be used, or a combination of two or more types of polyvinyl chlorides can be used.
In the blended product, the mass ratio of the polyvinyl chloride to the acrylonitrile butadiene rubber (polyvinyl chloride/acrylonitrile butadiene rubber) is preferably from 10/90 to 90/10, and more preferably from 20/80 to 70/30, from the perspective of achieving superior effect of the present invention and excellent mixability/processability.
A single acrylonitrile butadiene copolymer rubber can be used, or a combination of two or more types of acrylonitrile butadiene copolymer rubbers can be used. The method of producing the acrylonitrile butadiene copolymer rubber is not particularly limited. Examples thereof include known acrylonitrile butadiene copolymer rubbers.
The mass ratio of the butyl rubber to the acrylonitrile butadiene copolymer rubber (butyl rubber/acrylonitrile butadiene copolymer rubber) is preferably from 10/90 to 80/20, and more preferably from 10/90 to 70/30, from the perspective of achieving superior oil resistance and excellent refrigerant permeation resistance.
When the acrylonitrile butadiene copolymer rubber is a blended product, the content of the polymer A contained in the acrylonitrile butadiene copolymer rubber is preferably 80 mass% or less, and more preferably 60 mass% or less,

of the polymer from the perspective of achieving superior oil resistance and excellent balance of mixability/processability.

The acrylonitrile content of the acrylonitrile butadiene copolymer rubber is preferably 6 mass% or greater, and more preferably from 10 to 40 mass%, of the content of the polymer (total) from the perspectives of achieving superior oil resistance, maintaining rubber elasticity at low temperatures, and achieving excellent refrigerant permeation resistance.

Scale-like filler

The scale-like filler contained in the rubber composition of an embodiment of the present invention is a filler having a shape of scale.

The shape of the scale-like filler is not particularly limited as long as the shape is scale-like. The periphery of the scale-like filler may be irregular.

The average diameter of the scale-like filler is preferably from 0.1 to 700 μm, and more preferably from 1 to 100 μm, from the perspective of achieving excellent balance between refrigerant permeation resistance and mixability/processability.

In an embodiment of the present invention, the average diameter of the scale-like filler is a volume average diameter by the laser diffraction method by using a laser diffraction particle size distribution measuring device.

The aspect ratio (average diameter/thickness) of the scale-like filler is preferably from 5 to 80, and more preferably from 15 to 70, from the perspective of achieving superior oil resistance and excellent refrigerant permeation resistance.

In an embodiment of the present invention, the thickness of the scale-like filler is an average value calculated based on measurement values obtained by observing scale-like fillers in a magnification of 10000 times by using a scanning electron microscope (SEM), selecting a plurality of scale-like fillers randomly from the observed field, and measuring the thicknesses thereof.

The scale-like filler is preferably at least one type selected from the group consisting of talc and mica from the perspective of achieving superior oil resistance and excellent refrigerant permeation resistance and excellent mixability/processability.

The talc and mica are not particularly limited. Examples thereof include known talc and mica.

In an embodiment of the present invention, the scale-like filler may be a surface-treated scale-like filler or may be a scale-like filler that has not been surface-treated.

The method of producing the scale-like filler is not particularly limited. Examples thereof include known methods.

The content of the scale-like filler is preferably from 40 to 180 parts by mass, and more preferably from 60 to 150 parts by mass, per 100 parts by mass of the polymer from the perspective of achieving superior oil resistance and excellent refrigerant permeation resistance and excellent mixability/processability.

Additives

The rubber composition of an embodiment of the present invention may further contain additives as necessary.

Examples of the additives include rubbers except the acrylonitrile butadiene copolymer rubber and the butyl rubber described above, resins, fillers except the scale-like filler, softeners such as paraffin oils, stearic acid, zinc oxide, anti-aging agents, antioxidants, antistatic agents, flame retardants, vulcanizing agents such as sulfur or resin vulcanizing agents, vulcanization accelerators, crosslinking agents such as peroxides, and adhesion aids.

Each of the additives is not particularly limited. Examples thereof include known products.

The content of each of the additives may be selected as desired.

When the rubber composition of an embodiment of the present invention further contains a resin vulcanizing agent, examples of the resin vulcanizing agent include alkylphenol-formaldehyde resins and brominated alkylphenol-formaldehyde resins.

The content of the resin vulcanizing agent is preferably from 1 to 8 parts by mass, and more preferably from 2 to 6 parts by mass, per 100 parts by mass of the polymer.

Production method, use, and the like

The production of the rubber composition of an embodiment of the present invention is not particularly limited. An example is a method of producing a rubber composition, the method including kneading of the polymer and the scale-like filler described above and polyvinyl chloride and additives that may be used as necessary, at 30 to 150°C by using a sealed mixer, such as Banbury mixer and kneader, or a roller kneader. The butyl rubber and the acrylonitrile butadiene copolymer rubber may be added separately or added at the same time.

Conditions for vulcanization or crosslinking of the rubber composition of an embodiment of the present invention

are not particularly limited. For example, the rubber composition of an embodiment of the present invention may be vulcanized or crosslinked in a condition at from 140 to 160°C while pressure is being applied.

The rubber composition of an embodiment of the present invention can be used as, for example, a rubber composition for a hose which is used to transport a polyol ester and a refrigerant.

There is no particular limitation on the part of the hose to which the rubber composition of an embodiment of the present invention is applied; however, an example of a preferable aspect is one in which the rubber composition of an embodiment of the present invention is used to form an inner tube (in particular, the innermost layer) of a hose.

The refrigerant that is passed through the hose is not particularly limited. Examples thereof include fluorine-based compounds. Specific examples thereof include fluorine-based compounds having a double bond, such as 1,2,3,3,3-pentafluoropropene, 1,3,3,3-tetrafluoropropene, 2,3,3,3-tetrafluoropropene (structural formula: $CF_3$-CF=$CH_2$, HFO-1234yf), 1,2,3,3-tetrafluoropropene, and 3,3,3-trifluoropropene; and saturated hydrofluorocarbons, such as HFC-134a (structural formula: $CF_3$-$CFH_2$).

A single refrigerant can be used, or a combination of two or more types of refrigerants can be used.

The polyol ester passed through the hose is used as a refrigerating machine oil (lubricating oil).

An example of a preferable aspect is one in which the polyol ester is a hydrocarbon compound having an ester bond.

The polyol constituting the polyol ester is a compound having a plurality of hydroxy groups. The all or a part of the hydroxy groups contained in the polyol needs to form ester bond(s).

The number of the ester bond contained in one molecule of the polyol ester may be from 1 to 4. The polyol ester may or may not have a hydroxy group.

The hydrocarbon group contained as a main backbone of the polyol ester is not particularly limited. Examples thereof include aliphatic hydrocarbon groups (including straight-chain, branched chain, and alicyclic; may have an unsaturated bond), aromatic hydrocarbon groups, and combinations thereof. An example of a preferable aspect of the hydrocarbon group is an aliphatic hydrocarbon group.

The ester residue contained in the polyol ester may be a hydrocarbon group. The hydrocarbon groups are the same as those described above. An example of a preferable aspect of the hydrocarbon group is an aliphatic hydrocarbon group.

Examples of the polyol ester include compounds represented by Formula (1) below; and esters of trimethylolpropane, such as trimethylolpropane tricaprate, trimethylolpropane fore-run coconut fatty acid ester, and trimethylolpropane trioleate.

[Chemical Formula 1]

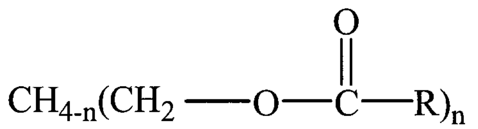

(1)

In Formula (1), R is a hydrocarbon group. The hydrocarbon groups are the same as hydrocarbon groups as the ester residues described above.

n is from 1 to 4. n is preferably 4.

Specific examples of the compound represented by Formula (1) include esters of pentaerythritol, such as pentaerythritol tetraheptanoate.

A single polyol ester can be used, or a combination of two or more types of polyol esters can be used.

The method of producing a polyol ester is not particularly limited. For example, synthesis can be performed by subjecting a polyol and a compound having a carboxy group (e.g. fatty acid) to an esterification reaction.

## Hose

The hose of an embodiment of the present invention has an inner tube formed from the rubber composition of an embodiment of the present invention and is a hose used to transport a polyol ester and a refrigerant. The polyol ester and the refrigerant may be a mixture of the polyol ester and the refrigerant.

The rubber composition used in the hose of an embodiment of the present invention is not particularly limited as long as it is the rubber composition of an embodiment of the present invention.

An example of the hose of an embodiment of the present invention is a hose having an inner tube, a reinforcing layer, and an outer tube that are arranged in this order.

Inner tube

The inner tube of the hose of an embodiment of the present invention is formed from the rubber composition of an embodiment of the present invention.
The inner tube may have one layer or a plurality of layers.
When the inner tube has a plurality of layers, at least the innermost layer of the inner tube is preferably formed from the rubber composition of an embodiment of the present invention. Furthermore, an interlayer rubber layer or the like may be arranged in between adjacent inner tubes.
An interlayer rubber layer or the like may be arranged in between an inner tube and a reinforcing layer adjacent to the inner tube.

Reinforcing layer

The reinforcing layer is not particularly limited as long as the reinforcing layer can be used in a hose.
Examples of the material used in the reinforcing layer includes fiber materials such as polyester-based fiber, polyamide-based fiber, aramid fiber, vinylon fiber, rayon fiber, poly-p-phenylene-benzobisoxazole fiber, and polyketone fiber, polyarylate fiber; and metal materials such as hard steel wire, including brass-plated wire, zinc-plated wire, and the like.
The shape of the reinforcing layer is not particularly limited. Examples thereof include braid wind shape and spiral wind shape.
A single reinforcing layer can be used or a combination of two or more reinforcing layers can be used.
The reinforcing layer may have one layer or a plurality of layers.
When the reinforcing layer has a plurality of layers, an interlayer rubber layer or the like may be arranged in between adjacent reinforcing layers.

Outer tube

The material constituting the outer tube is not particularly limited. For example, a rubber composition can be used. Specific examples thereof include styrene butadiene rubber-based rubber compositions, chloroprene rubber-based rubber compositions, and ethylene propylene diene rubber-based rubber compositions.
The outer tube may have one layer or a plurality of layers.
When the outer tube has a plurality of layers, an interlayer rubber layer or the like may be arranged in between adjacent outer tubes.
An interlayer rubber layer or the like may be arranged in between an outer tube and a reinforcing layer adjacent to the outer tube.
Hereinafter, a hose of an embodiment of the present invention will be described in detail with reference to the attached drawings. The hose of an embodiment of the present invention is not limited to the drawings.
FIG. 1 is a perspective view illustrating a cutaway of each layer of a hose of an embodiment of the present invention.
In FIG. 1, a hose 1 has an inner tube 2, a reinforcing layer 3 arranged adjacent to the outer peripheral side of the inner tube 2, and an outer tube 4 arranged adjacent to the outer peripheral side of the reinforcing layer 3.
The inner tube 2 is formed from the rubber composition of an embodiment of the present invention.
The method of producing the hose of an embodiment of the present invention is not particularly limited. Examples thereof include the following method.
First, the rubber composition of an embodiment of the present invention is extruded from a rubber extruder for inner tube rubber materials onto a mandrel to which a mold release agent has been applied, to form an inner tube.
A reinforcing layer is then formed on an inner tube (in the case where an adhesive layer is present, on the adhesive layer). The method of forming a reinforcing layer is not particularly limited.
Furthermore, an outer tube material (e.g. material constituting an outer tube described above) is extruded onto the reinforcing layer (in the case where an adhesive layer is present, on the adhesive layer) to form an outer tube.
Thereafter, these layers are bonded by vulcanization in a condition at 130 to 190°C for 30 to 180 minutes, and thus a hose of an embodiment of the present invention can be produced. Examples of vulcanization methods include steam vulcanization, oven vulcanization (dry heat vulcanization), and hot water vulcanization.
The hose of an embodiment of the present invention is used to transport a polyol ester and a refrigerant and is a so-called refrigerant-transporting hose. The polyol ester and the refrigerant are the same as those described above.
The hose of an embodiment of the present invention can be used as, for example, a hose for air conditioners, such as air conditioning for vehicles. The hose of an embodiment of the present invention can be used for high pressure and for low pressure.

In the hose of an embodiment of the present invention, an example of a preferable aspect is one in which tube(s) except the inner layer (e.g. outer tube) is formed from a rubber composition from the perspective of reducing noise. In this case, the rubber composition constituting a tube except the inner layer needs to contain 50 mass% or greater of the rubber component as a polymer component in the total amount of the polymer component(s). The rubber composition constituting a tube except the inner layer may be the rubber composition of an embodiment of the present invention. Note that, when the rubber composition of an embodiment of the present invention is used as the rubber composition used in a tube except the inner layer, and the acrylonitrile butadiene copolymer rubber contained in the rubber composition of an embodiment of the present invention contains the blended product described above, the blended product corresponds to the rubber component contained in the rubber composition constituting a tube except the inner layer.

An example of a preferable aspect of the hose of an embodiment of the present invention contains no resin layers from the perspective of reducing noise. In the present invention, "a hose contains no resin layers" refers to the case where the composition containing the polymer component used to form each layer of the hose does not contain a resin or the case where resin is used in an amount less than 50 mass% of the total amount of the polymer component.

Examples of the resin include polyolefin and polyamide. In an embodiment of the present invention, the resin does not contain a resin vulcanizing agent or the blended product described above.

Note that the composition constituting the resin layer does not contain the rubber composition of an embodiment of the present invention.

## Examples

The present invention is described below in detail using examples but the present invention is not limited to such examples.

### Production of rubber composition

The components in Table 1 below (unit of content of each component: part by mass) and the common components described below were mixed by an agitator to produce a rubber composition.

### Common components

The content of each component of the common components is shown in terms of an amount (part by mass) per 100 parts by mass of the polymer shown in Table 1.

- Carbon black 29 parts by mass: ISAF (trade name: Show Black N220, available from Cabot Japan K.K.)
- Stearic acid 2 parts by mass: trade name: Industrial stearic acid N, available from Chiba Fatty Acid Co., Ltd.
- Resin vulcanizing agent 5 parts by mass: Brominated alkylphenol-formaldehyde resin, Tackirol 250-I, available from Taoka Chemical Co., Ltd.
- Paraffin oil 5 parts by mass: Machine oil 22, available from Showa Shell Sekiyu K.K.
- Zinc oxide 5 parts by mass: trade name: Zinc Oxide III, available from Seido Chemical Industry Co., Ltd.

### Evaluation

The following evaluations were performed by using the rubber composition produced as described above. The results are shown in Table 1.

### Oil resistance

• Preparation of sheet

The rubber composition produced as described above was vulcanized at 153°C for 45 minutes by using a press vulcanizing machine, and a sheet having a thickness of 0.5 mm was prepared.

• Oil resistance test

In accordance with JIS K 6258, the sheet produced as described above (length: 15 cm; width: 15 cm) was subjected to the oil resistance test in which the sheet was immersed in a polyol ester (trade name: ND-11, available from JX Nippon Oil & Energy Corporation) at 100°C for 70 hours, and the volume of the sheet was measured before

and after the test to calculate the volume swelling ratio. The results are expressed as index values with Comparative Example 1 being assigned the index value of 100.

A smaller index value indicates superior oil resistance.

Refrigerant permeation resistance

• Preparation of sheet

The rubber composition produced as described above was vulcanized at 153°C for 45 minutes by using a press vulcanizing machine, and a sheet having a thickness of 0.5 mm was prepared.

• Refrigerant permeation test

The evaluation method of refrigerant permeation resistance will be described below with reference to the attached drawings.

FIG. 2 is a cross-sectional view of a cup for evaluation that is used to evaluate refrigerant permeation resistance of a rubber composition of an embodiment of the present invention.

In FIG. 2, a cup for evaluation 30 has a stainless steel cup 10 (hereinafter, cup 10), the sheet 14 produced as described above, a sintered metal plate 16, fixing members 18 and 19, bolts 20, and nuts 22. A refrigerant 12 is contained inside of the cup 10.

First, the refrigerant 12 was poured into the cup 10 until the half of volume of the cup 10 was filled, the opening portion of the cup 10 was covered by the sheet 14, and the sintered metal plate 16 was placed on the upper portion of the sheet 14. Thereafter, the end portion of the cup 10, the sheet 14, and the sintered metal plate 16 were fixed through the fixing members 18 and 19 by using the bolts 20 and the nuts 22, thereby adhering the end portion of the cup 10 and the sheet 14 and the sintered metal plate 16, and thus the cup for evaluation 30 was prepared.

As a refrigerant in this example, HFO-1234yf (available from Du Pont-Mitsui Fluorochemicals Company, Ltd.) was used.

The cup for evaluation prepared as described above was subjected to the refrigerant permeation test in which the cup was left in a condition at 100°C for 24 hours.

The weight of the entire cup for evaluation was measured before and after the test to calculate the weight loss after the test.

The weight loss after the test and the like were applied to the following mathematical expression to calculate the gas permeation coefficient. The results are expressed as index values with Comparative Example 1 being assigned the index value of 100.

$$\text{Gas permeation coefficient } (\text{mg}\cdot\text{mm}/24\ \text{hr}\cdot\text{cm}^2) = (M\cdot t)/(T\cdot A)$$

In the expression, M is the weight loss (mg), t is the film thickness of the sheet (mm), T is the duration of the test (24 hr), and A is the area of permeation ($cm^2$).

A smaller index value of the gas permeation coefficient indicates superior refrigerant permeation resistance.

Tensile properties

• Preparation of sheet

The rubber composition produced as described above was vulcanized at 153°C for 45 minutes by using a press vulcanizing machine, and a sheet having a thickness of 2 mm was prepared.

• Tensile test

By using the sheet prepared as described above, the tensile test was performed in a condition of tensile test speed of 500 mm/min at 23°C in accordance with JIS K 6251 to measure the tensile strength (TB) and the elongation at break (EB).

• Hardness measurement test

By stacking 3 pieces of sheets prepared as described above, the hardness measurement test was performed in a condition at 23°C by using a type A durometer in accordance with JIS K 6253 to measure the hardness (HS).

[Table 1-I]

| Table 1 | | AN content in NBR (mass%) | PVC/NBR (mass ratio) | AN content in acrylonitrile butadiene copolymer rubber (mass%) | Examples 1 | 2 | 3 | 4 | 5 | 6 |
|---|---|---|---|---|---|---|---|---|---|---|
| Polymer | Butyl rubber | - | - | - | 70 | 70 | 70 | 90 | 50 | 70 |
| | Acrylonitrile butadiene copolymer rubber 1 (NBR) | 45% | 0/100 | 45% | 30 | | | | | |
| | Acrylonitrile butadiene copolymer rubber 2 (NBR) | 41% | 0/100 | 41% | | 30 | | 10 | | |
| | Acrylonitrile butadiene copolymer rubber 3 (NBR) | 33.5% | 0/100 | 33.5% | | | 30 | | | |
| | Acrylonitrile butadiene copolymer rubber 4 (NBR-PVC) | 36% | 30/70 | 25.2% | | | | | 50 | |
| | Acrylonitrile butadiene copolymer rubber 5 (NBR-PVC) | 43% | 30/70 | 30.1% | | | | | | 30 |
| | Comparative NBR | 19.0% | 0/100 | 19.0% | | | | | | |
| | AN content relative to entire polymer (mass%) | | | | 14% | 12% | 10% | 4% | 13% | 9% |
| | Total content of acrylonitrile butadiene rubber and butyl rubber relative to entire polymer (mass%) | | | | 100% | 100% | 100% | 100% | 85% | 91% |
| | Butyl rubber/acrylonitrile butadiene copolymer rubber (mass ratio) | | | | 70/30 | 70/30 | 70/30 | 90/10 | 50/50 | 70/30 |
| Scale-like filler 1 (talc) | | | | | 130 | 130 | 130 | 130 | 130 | 130 |
| Scale-like filler 2 (mica) | | | | | | | | | | |
| Oil resistance | | Index value | | | 55 | 65 | 76 | 89 | 51 | 60 |
| Refrigerant permeation resistance | | Index value | | | 121 | 107 | 131 | 111 | 108 | 116 |
| Tensile properties | | TB MPa | | | 7.7 | 8.4 | 6.8 | 7.9 | 9.1 | 7.2 |
| | | EB % | | | 276 | 248 | 223 | 180 | 138 | 129 |
| | | Hardness (HS) | | | 85 | 84 | 84 | 84 | 94 | 94 |

[Table 1-II]

| Table 1 | | AN content in NBR (mass%) | PVC/NBR (mass ratio) | AN content in acrylonitrile butadiene copolymer rubber (mass%) | Examples | | | | Comparative Examples | |
|---|---|---|---|---|---|---|---|---|---|---|
| | | | | | 7 | 8 | 9 | 10 | 1 | 2 |
| Polymer | Butyl rubber | - | - | - | 70 | 90 | 70 | 70 | 100 | 70 |
| | Acrylonitrile butadiene copolymer rubber 1 (NBR) | 45% | 0/100 | 45% | | | 30 | 30 | | |
| | Acrylonitrile butadiene copolymer rubber 2 (NBR) | 41% | 0/100 | 41% | | | | | | |
| | Acrylonitrile butadiene copolymer rubber 3 (NBR) | 33.5% | 0/100 | 33.5% | | | | | | |
| | Acrylonitrile butadiene copolymer rubber 4 (NBR-PVC) | 36% | 30/70 | 25.2% | 30 | 10 | | | | |
| | Acrylonitrile butadiene copolymer rubber 5 (NBR-PVC) | 43% | 30/70 | 30.1% | | | | | | |
| | Comparative NBR | 19.0% | 0/100 | 19.0% | | | | | | 30 |
| | AN content relative to entire polymer (mass%) | | | | 8% | 3% | 14% | 14% | 0% | 6% |
| | Total content of acrylonitrile butadiene rubber and butyl rubber relative to entire polymer (mass%) | | | | 91% | 97% | 100% | 100% | 100% | 100% |
| | Butyl rubber/acrylonitrile butadiene copolymer rubber (mass ratio) | | | | 70/30 | 90/10 | 70/30 | 70/30 | - | 70/30 |
| Scale-like filler 1 (talc) | | | | | 130 | 130 | | 50 | 130 | 130 |
| Scale-like filler 2 (mica) | | | | | | | 70 | 50 | | |
| Oil resistance | | Index value | | | 72 | 86 | 63 | 50 | 100 | 134 |
| Refrigerant permeation resistance | | Index value | | | 114 | 120 | 124 | 117 | 100 | 202 |
| Tensile properties | | TB MPa<br>EB %<br>Hardness (HS) | | | 8.4<br>152<br>91 | 7.2<br>165<br>87 | 11.5<br>231<br>81 | 9.7<br>150<br>87 | 8.0<br>391<br>79 | 7.9<br>223<br>83 |

Details of the components described in Table 1 are as follows.

- Butyl rubber: trade name: BUTYL 301, available from LANXESS, weight average molecular weight: 600000
- Acrylonitrile butadiene copolymer rubber 1 (NBR): acrylonitrile butadiene rubber, trade name: Nipol DN005, available from Zeon Corporation
- Acrylonitrile butadiene copolymer rubber 2 (NBR): acrylonitrile butadiene rubber, trade name: Nipol 1041, available from Zeon Corporation
- Acrylonitrile butadiene copolymer rubber 3 (NBR): acrylonitrile butadiene rubber, trade name: Nipol 1042, available from Zeon Corporation
- Acrylonitrile butadiene copolymer rubber 4 (NBR-PVC): Nipol DN508SCR, available from Zeon Corporation, blended product of acrylonitrile butadiene rubber and polyvinyl chloride
- Acrylonitrile butadiene copolymer rubber 5 (NBR-PVC): Nipol DN517, available from Zeon Corporation, blended product of acrylonitrile butadiene rubber and polyvinyl chloride
- Comparative NBR: acrylonitrile butadiene rubber, trade name: Nipol DN401, available from Zeon Corporation
- Scale-like filler 1 (talc): MISTRON VAPOR (trade name), available from Imerys Specialities Japan Co., Ltd. Talc having a scale-like shape. Average diameter: 6.1 μm, aspect ratio: 6.
- Scale-like filler 2 (mica): Yamaguchi Mica S-21, available from Yamaguchi Mica Co., Ltd. Mica having a scale-like shape. Average diameter: 23 μm, aspect ratio: 70.

As is clear from the results shown in Table 1, Comparative Example 2 containing the acrylonitrile butadiene copolymer rubber having the acrylonitrile content that was outside the predetermined range exhibited lower oil resistance compared to Comparative Example 1 containing no acrylonitrile butadiene copolymer rubber.

On the other hand, Examples 1 to 10 exhibited superior oil resistances compared to those of Comparative Examples 1 and 2.

When Examples 1 to 4 are compared, a greater AN content relative to the total content of the polymer resulted in superior oil resistance. Examples 5 to 8 (cases where the acrylonitrile butadiene copolymer rubber was a blended product) achieved similar results.

Furthermore, Examples 1 to 10 exhibited superior refrigerant permeation resistances compared to that of Comparative Example 2.

Among these, from the results in which Example 2 exhibited the best refrigerant permeation resistance among Examples 1 to 4 and Example 5 exhibited the best refrigerant permeation resistance among Examples 5 to 8, it was found that the cases where the AN content was greater than 10 mass% but less than 14 mass% relative to the total content of the polymer exhibited superior refrigerant permeation resistance.

Reference Signs List

| | |
|---|---|
| 1 | Hose |
| 2 | Inner tube |
| 3 | Reinforcing layer |
| 4 | Outer tube |
| 10 | Cup |
| 12 | Refrigerant |
| 14 | Sheet |
| 16 | Sintered metal plate |
| 18, 19 | Fixing member |
| 20 | Bolt |
| 22 | Nut |
| 30 | Cup for evaluation |

## Claims

**1.** A rubber composition for a hose used to transport a polyol ester and a refrigerant, the rubber composition comprising:

a polymer containing a butyl rubber and an acrylonitrile butadiene copolymer rubber having an acrylonitrile content of 25 mass% or greater; and

a scale-like filler.

2. The rubber composition according to claim 1, wherein the acrylonitrile butadiene copolymer rubber is at least one type selected from the group consisting of an acrylonitrile butadiene rubber and a blended product of an acrylonitile butadiene rubber and a polyvinyl chloride.

3. The rubber composition according to claim 1 or 2, wherein a content of the acrylonitrile content is 6 mass% or greater of a content of the polymer.

4. The rubber composition according to any one of claims 1 to 3, wherein the scale-like filler is at least one type selected from the group consisting of talc and mica.

5. The rubber composition according to any one of claims 1 to 4, wherein a content of the scale-like filler is from 60 to 180 parts by mass per 100 parts by mass of the polymer.

6. A hose that is used to transport a polyol ester and a refrigerant, the hose comprising an inner tube formed from the rubber composition described in any one of claims 1 to 5.

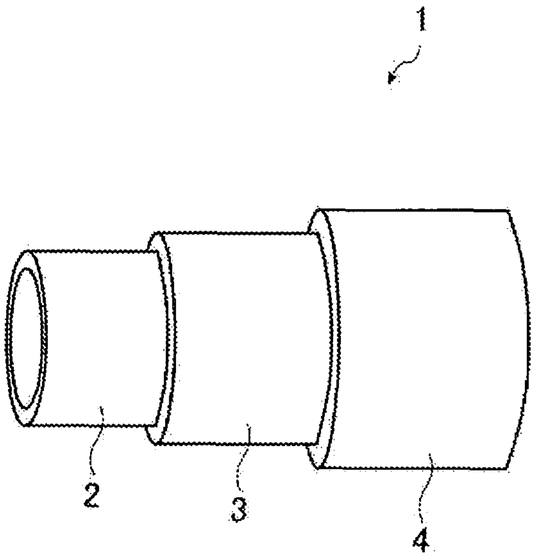


FIG. 1

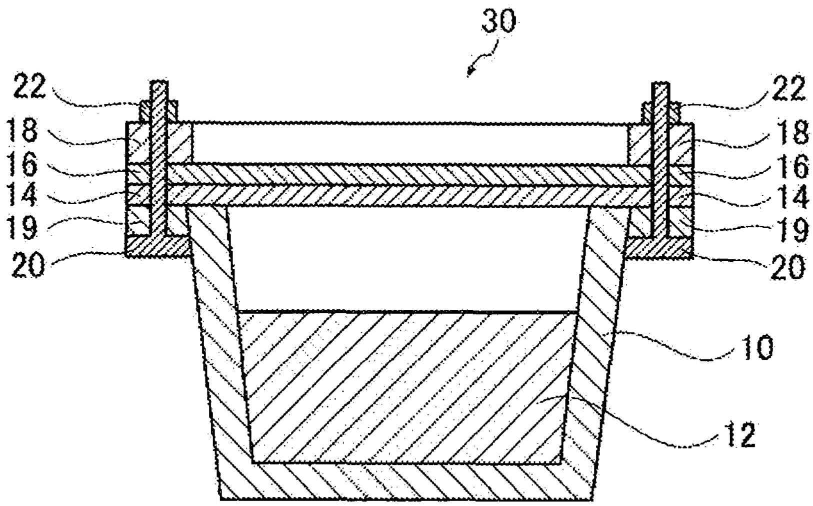


FIG. 2

**INTERNATIONAL SEARCH REPORT**

International application No.
PCT/JP2017/001694

A. CLASSIFICATION OF SUBJECT MATTER
*C08L23/22*(2006.01)i, *C08K7/00*(2006.01)i, *C08L9/02*(2006.01)i, *F16L11/08* (2006.01)i, *F25B1/00*(2006.01)i

According to International Patent Classification (IPC) or to both national classification and IPC

B. FIELDS SEARCHED

Minimum documentation searched (classification system followed by classification symbols)
C08L23/22, C08K7/00, C08L9/02, F16L11/08, F25B1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-228081 A (Tokai Rubber Industries, Ltd.), 07 November 2013 (07.11.2013), paragraphs [0014] to [0064]; fig. 1 (Family: none) | 1-6 |
| Y | JP 2013-227480 A (Tokai Rubber Industries, Ltd.), 07 November 2013 (07.11.2013), claims 1 to 9; paragraphs [0017] to [0049] (Family: none) | 1-6 |
| Y | JP 2014-240702 A (Panasonic Corp.), 25 December 2014 (25.12.2014), claims 1 to 9; paragraphs [0028] to [0038]; fig. 1 & WO 2013/051271 A1 | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 April 2017 (13.04.17) | 25 April 2017 (25.04.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/001694

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-035708 A (Bridgestone Corp.), 05 February 2004 (05.02.2004), claims 1 to 16; paragraphs [0028] to [0092]; fig. 1 to 5 (Family: none) | 1-6 |
| A | JP 2005-023246 A (Bridgestone Corp.), 27 January 2005 (27.01.2005), claims 1 to 13; paragraphs [0022] to [0084]; fig. 1 to 4 (Family: none) | 1-6 |
| A | JP 3372475 B2 (Nichirin Co., Ltd.), 04 February 2003 (04.02.2003), claims 1 to 9 & JP 11-257551 A | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004176908 A